# EUROPEAN PATENT APPLICATION

(11) **EP 1 671 773 A1**
(43) Date of publication of application: **21.06.2006**
(21) Application number: 04106734.9
(22) Date of filing: 20.12.2004
(51) Int. Cl.: B29B 13/06, B29B 9/06

(54) **Pellet treatment unit**

(71) Applicant: TOTAL PETROCHEMICALS RESEARCH FELUY, 7181 Seneffe (Feluy) (BE)
(72) Inventor: Damme, Eric, 7181 Arquennes (BE)

(57) **Abstract**

The present invention discloses a continuous process for producing polymer pellets having reduced volatiles.

## Description

This invention relates to a method for treating polymer particles in order to remove the volatile components.

Many of the products prepared from polymer and particularly from polyethylene are in contact with food and it is thus desirable to prepare "good taste" grades. These products are for example pipes that are in contact with drinking water or food packaging that is in contact with food. Residual hydrocarbons or additives can give rise to unwanted odours. It is also important for some applications to remove residual hydrocarbons from the final product such as for example removal of ethylene from low density polyethylene. An additional example is to reduce the amount of volatiles from polypropylene in order to reduce the fumes during the transformation step.

In order to decrease or suppress the unwanted odours the polymer pellets are sent to a pellet treatment unit located between the extruder and the blenders.

Most of the prior art pellet treatment units operate in a batch mode. The pellets originating from the extruder are directed to a silo having a capacity of about 300 tons. The silo is filled to the desired level and the pellets are then submitted to a stream of hot gas during a period of time that is inversely proportional to the gas temperature: the higher the temperature, the shorter the residence time. A compromise must nevertheless be reached because if the temperature is too high, the pellets start melting and stick to one another and if the temperature is too low, the cost is reduced but the residence time is prohibitively long. Typical values for the temperature and the residence time for polyethylene are respectively from 80 to 110 °C and from 5 to 50 hours. The hot gas is injected near the base of the silo by a compressor and the temperature is regulated with an electrical resistance or heat exchanger at a rate of 500 to 5000 m³/hr/ton of product. The gas then leaves the silo through the top surface and carries with it the residual hydrocarbons that have migrated from the interior of the pellets towards their surface. Hot gas volume is needed both for heating the pellets to the target temperature of from 80 to 110 °C and for maintaining them at that temperature for the necessary residence time of from 10 to 50 hours. Afterwards, the pellets must be cooled down to a temperature of 60 to 70 °C to enable easy transfer without sticking.

After a residence time of from 5 to 50 hours, the content of the silo is cooled by cold gas and then emptied through its bottom part ant the pellets are pushed towards the blenders by a gas compressor.

This method has been used in the past but it suffers from the disadvantage that a considerable time is wasted as the pellets are immobilised in the silo while it is being filled. In addition large quantities of time and energy are needed to heat the entire silo to the desired temperature of about 100 °C and then to cool it down to a temperature of about 60 °C.

Patent application W02004/039848 describes a continuous process to treat the polymer: however it still requires very large amounts of purging air. The purged volatiles are diluted in very large amounts of gas that is very difficult to treat and is usually released in the atmosphere.

There is thus a need for a system that uses less time and energy.

The present invention discloses a pellet treatment unit that requires less waiting time.

The present invention also discloses a system that consumes less heating energy.

The present invention further discloses a system that requires no or little heating and that strongly reduces the amount of liberated purge gas. The purge gas can be treated and no or very little volatiles are released into the atmosphere.

Accordingly, the present invention discloses a pellet treatment unit that operates in a continuous mode with a silo that is at constant level. That mode of operation suppresses the long waiting time necessary to fill the silo, the long time necessary to heat the content of a full silo. The amount of energy necessary to heat the silo is further reduced by recycling the heated gas exiting the cooling silo back into the stream of hot gas used to heat the heating silo.

### List of figures.

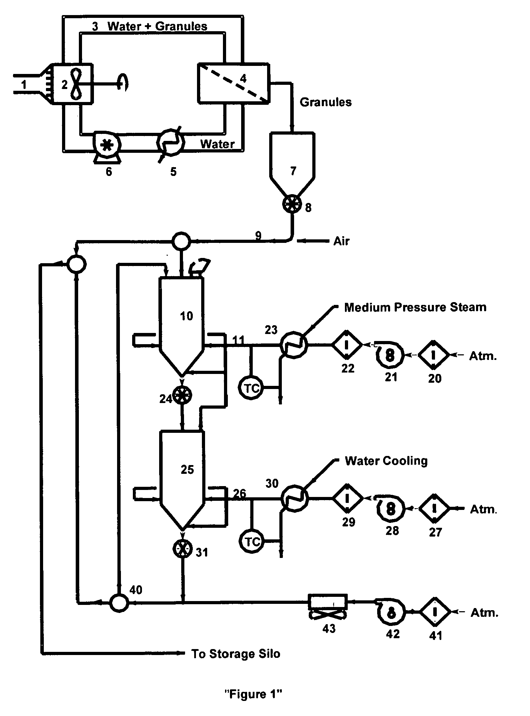

Figure 1 is a schematic diagram of the complete pellet treatment unit starting from the pelletiser to the storage silo.

Figure 2 is a schematic diagram of the heating silo/cooling silo unit wherein the warmed-up gas exiting the cooling unit is recycled back to the heating unit.

Figure 3 represents a schematic diagram of the pellet treatment unit wherein the pellets exiting the pelletiser are conveyed to the heating silo/cooling silo unit by a stream of warm water.

The strands of molten material exiting the extruder (1) are cut into pellets by rotating knives (2). A stream of cooling fluid, typically water, carries the hot pellets through a cooling pipe (3) The pellets are then separated from the cooling fluid in a dryer (4). The fluid, warmed up by contact with the pellets, is sent to a cooler (5) and is recycled back to the cooling pipe. A pump (6) keeps the fluid circulating in the pipe. The pellets, now at a temperature of 60 to 70 °C are dumped in a small silo (7), and are directed via a rotating valve (8) located at the bottom of the silo to a pipe (9) wherein they are entrained by a stream of gas, typically at a temperature of 50 to 60 °C, towards the heating silo (10). They enter the heating silo via the upper surface, said heating silo being designed to have a plug-flow behaviour. The pellets are then heated to the desired temperature by a stream of hot gas (11). Atmospheric gas is sent via a filter (20) to the hot gas blower (21), then via a second filter (22) to the gas heater (23), and then to the inferior part of the heating silo. The gas heater is a flow of medium pressure steam or an electric resistance.

The hot gas transits upwards through the silo and escapes through its upper surface. The pellets remain in the heating silo for a time that is sufficient to allow for hydrocarbon residues to migrate to the pellets' surface, be carried upward by the hot gas and escape through the silo's upper surface. The pellets then exit the heating silo through a rotating valve (24), the rotating speed of which is adjusted to keep the heating silo constantly full, and they fall into the cooling silo (25). The pellets are cooled by a stream of cool gas (26) before being sent to the blenders, in order to avoid sticking. Atmospheric gas is sent via a filter (27) to the cool gas blower (28), then via a second filter (29) to the gas cooler (30), and then to the inferior part of the cooling silo. The gas is cooled with water. The pellets exit the cooling silo through a rotating valve (31) and are then entrained to the homogenisation silos through a pipe (40) by a stream of cool gas. Atmospheric gas is sent via a filter (41) to the pellet transfer blower (42), then to the pellet transfer cooler (43) and then to the inferior part of the blenders.

The gas used to cool down the pellets is warmed up in the process: it can be recycled back to the heating unit in order to decrease energy consumption.

The present invention also discloses a method for reducing volatiles in polymer pellets that comprises the steps of:
a) retrieving the pellets from the extruder (1) and pushing them through a cooling pipe (3) with a stream of cooling water and with a residence time sufficient to reach the desired temperature;
b) separating the pellets from the water in a dryer (4), returning the water to the cooling system via a cooling device (5) and pushing the cooled pellets through a pipe (9) with a stream of gas at from 20 to 60 °C into the heating silo (10);
c) keeping the pellets in the heating silo under a stream of hot gas (11) entering near the lower end of the heating silo and escaping through the upper open surface;
d) continuously retrieving pellets through the bottom part of the heating silo via a rotating valve (24) that allows control of the exiting flow of material in order to keep the heating silo constantly full;
e) feeding the pellets to the cooling silo (25);
f) keeping the cooling silo under a stream of gas at room temperature (26) to bring the pellets' temperature down to the desired level;
g) sending the cooled pellets to the homogenisation silos.

The stream of hot gas sent in the heating silo can be any suitable gas. For high density polyethylene, it is preferably air. For other polymers requiring high security operations, an inert gas is preferred.

The temperature of the stream of cooling water adjacent to the extruder is typically of from 50 to 70 °C, thereby cooling down the pellets to a temperature of 60 to 70 °C. The residence time necessary to cool down the pellets to the desired level is of from 10 to 20 seconds.

The residence time in the heating silo depends upon the temperature of the silo: the higher the temperature, the shorter the residence time. The most preferred operating conditions for polyethylene pellets are a temperature of from 80 to 110 °C and a residence time of from 5 to 50 hours, preferably of from 8 to 15 hours

The temperature of the pellets exiting the cooling silo is typically of from 60 to 70 °C.

This method still requires a very large quantity of hot gas, and a large amount of energy is therefore necessary for heating the heating silo.

In a preferred embodiment according to the present invention, the pellets exiting the extruder are cooled to a temperature higher than the typical temperature of 60 to 70 °C and as close as possible to the temperature of the heating silo. Typically for polyethylene, they are cooled to a temperature of from 80 to 110 °C. This is achieved by altering the procedure described here-above in either of two ways.
1. The residence time in the cooling system adjacent to the extruder is shortened, while keeping the cooling water temperature unchanged.
2. The stream of cooling water is kept at a temperature that is close to the new target temperature of the pellets, while keeping the residence time unchanged.

In the first option, the residence time in the cooling system adjacent to the extruder is typically halved, and is thus of from4 to 10 seconds. With this short residence time, the external shell of the pellets are brought down to the temperature of the cooling stream, i.e. to a temperature of from 60 to 70 °C whereas the core of the pellets remains hot, typically at a temperature of from 110 to 130 °C. There is a progressive temperature adjustment within the pellet between its cool surface and its hot core leading to an overall pellet temperature that is close to the temperature required in the heating silo. The advantage of the method is that the temperature conditions at the exit of the extruder are not modified and the knife can thus properly cut the strands exiting the extruder into pellets.

In the second option, the temperature of the cooling system is raised to a temperature that depends upon the nature of the pellets and primarily upon their viscosity. The temperature that is suitable for viscous polymers is higher than that useful for fluid polymers. For high density polyethylene, a water temperature of up to 100 °C is suitable whereas for low density polyethylene, the water temperature of the order of 80 °C. This method suffers from the disadvantage that the conditions at the exit of the extruder are modified. If the water temperature is not carefully controlled, the increase in temperature may cause the pellets to transform into a sticky mass when the strands exiting the extruder are cut into pellets.

Both methods suffer from the minor disadvantage that when transiting through the pipe leading from the dryer to the heating silo, the pellets can be elongated into "angel hair".

The first option is preferred.

In either of these two methods, the pellets are kept at a temperature that is close to that of the heating silo and the amount of hot gas necessary to treat the pellets is thus considerably reduced.

In another preferred embodiment according to the present invention, the transfer of the pellets from the cooling device adjacent to the extruder towards the heating silo is carried out with a stream of hot water rather than with a stream of hot gas. This method considerably reduces the formation of "angel hair" that is associated with the shortening of residence time in the cooling system and mostly it reduces the amount of necessary energy because the system is kept at a constant temperature all the way to the heating silo. In addition, the pellets can travel a very long distance, without cooling, allowing the temperature to even out through the pellets' interior when the first option is used.

In this method, the dryer is placed just before the heating silo. It can be placed either directly above the heating silo thereby avoiding all pneumatic transfer of pellets or adjacent to the heating silo, thus necessitating a short pneumatic transfer.

In yet another embodiment according to the present invention, the cooling silo is replaced by a heat exchange system formed of vertical plates filled with water at room temperature. The pellets exiting the heating silo fall between the vertical walls of the cooling plates under gravitational acceleration. The cooling plates are rectangles having a typical size of from 1.5 to 2.5 metres by 1.4 to 2 metres . No, the volume is lower, so there is less residence time.....The residence time between the plates is very small as the pellets merely transit between the plates through the action of gravity.

The several embodiments according to the present invention all allow a substantial reduction of hot gas consumption.

### Example 1.

Polyethylene pellets suitable for preparing pipes were degassed in the pellet treatment unit described hereafter.

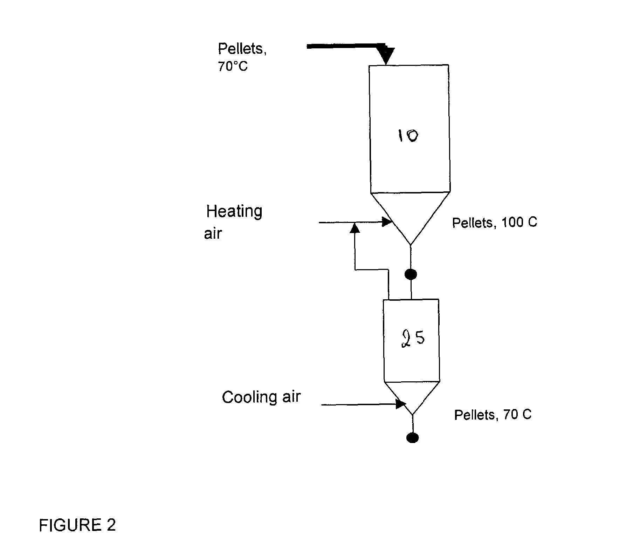

Figure 2 represents schematically the degassing part of the unit.
Pellets at a temperature of about 70 °C entered the heating silo where they were kept under a flow of heating air at about 100 °C for a period of about 12 hours. The pellet treatment unit was designed to work at a flow rate of about 42 tons/hr in order to accommodate the rate of production of pellets. The capacity of the silo was of about 1000 m³ and it was designed to have a plug flow profile for the incoming and outgoing pellets. The hopper angle of discharge was of 50 °.

In that particular configuration, the total heat energy needed to heat-up the pellets from 70°C up to 100°C equal to 663 kWh was supplied by hot air having a maximum temperature at the inlet of 105 °C in order to avoid melting of the polyethylene. The air escaping through the upper surface of the silo was measured to be about 80 °C, whereas the pellets retrieved from the inferior part of the silo were at a temperature of about 100 °C. The amount of gas needed to heat the pellets was thus of about 75,000 Nm³/hr. The power required to compress the air was recorded to be 750 kW and the energy needed to heat up the air from 40°C (outlet of compressor) to 105°C was of about 1700 kW.

In the next step, the pellets were cooled in a cooling silo before being sent to the homogenisation unit. The capacity of the cooling silo was of about 200 m³. The pellets were cooled from their exit temperature from the heating silo of 100 °C to the temperature of 70 °C suitable for the next step. The cooling means was cold air entering the cooling silo at a temperature of about 30 °C and exiting the cooling silo through its upper surface at a temperature of 90 °C. The amount of cooling air necessary was thus of about 31,000 Nm³/hr. The cooling air was sent to the atmosphere. The energy required to compress the air was of about 300 kW.
The hot air was just vented to the atmosphere. The volatile content measured by chromatography (KWS method, carbon-hydrogen chromatography) was of about 560 ppm at the inlet and of 80 ppm at the outlet. The treatment thus reduced the volatile content by 85%, amounting to the elimination of about 19.8 kg/hr of volatiles. The volatiles were diluted in 75000 Nm³/hr and did not require any further treatment. Most of the volatiles were eliminated in the first silo.

In order to minimize the formation of angel hair in the transfer line, said transfer line was equipped with "gamma bends" and was shot-peened
The formation of large angel hair was estimated by passing the pellets onto a wire screen of 2x2 cm. The amount of angel hair collected by the screen for each 25 tons of product was recorded to be of 0.2 g.

### Example 2.

The thermal efficiency of the system described in example 1 was improved by recycling the warmed up cooling air exiting the "cooling silo" into the first silo. The thermal balance was modified as follows.
44000 Nm³/hr of heating air were sent into the heating silo (purge silo) and 31000 Nm³/hr of warmed-up air exiting the cooling silo were recycled back into the heating silo.
The energy required to compress the 44000 Nm³/hr was of about 450 kW.

| | Energy requirement |
|---|---|
| Purge gas blower | 450 Kw (electrical) |
| Cooling gas blower | 450 kw (electrical) |
| Heating of gas | 1160 Kw (steam) |
| Cooling of gas | 350 Kw |

The amount of volatiles entering the silo was of 550 ppm and that exiting the cooling silo was of of 80 ppm. The amount of angel hair in the final product was of about 0.3 g per 25 tons of product.

### Example 3.

In this example, the pelletising step was modified in order to increase the temperature of the pellets.
The water temperature at the inlet of the pelletiser was increased from 55°C up to 75°C with a water/pellet contact time of about 15 seconds. This increased in temperature was obtained by cooling the cooling water to a lesser extent. The temperature of the pellets at the outlet of the dryer was of about 95°C. The temperature of the pellets was measured while keeping the thermocouple in the pellet bag during several minutes in order to have a uniform temperature.
The pellets were transferred to the heating silo using the same transfer line as in example 1, and they entered the purging silo at a temperature of about 90°C.
The degassing was done using only the warmed-up air exiting the cooling silo that was recycled into the purge silo in an amount of about 31000 Nm³/hr so that no or very little heating was required.
The air leaving the cooling silo was heated up to 105°C before being sent to the purge silo.

| | Energy requirement |
|---|---|
| | |
| Cooling gas compression (31000 Nm³/hr) | 400 Kw (electrical) |
| Heating of gas | 300 Kw (steam) |
| Cooling of gas | 300 Kw |

The amount of volatiles at the inlet of 600 ppm was reduced to 110 ppm after treatment.
The level of angel hair found in the product was of 3 g per 25 tons of product.

### Example 4.

Example 4 was identical to example 3, except that the residence time of the pellets with cooling water after exiting the pelletiser was reduced from 13 seconds to 5 seconds. This had a very positive effect on the level of angel hair. It was reduced from 3g per 25 tons to 1.1 g per 25 tons.

### Example 5.

The same conditions for pelletising and for transfer to purge silo as those of example 4 were used.

A plate exchanger especially designed to heat or to cool down the pellets was used to replace the cooling silo. This type of heat exchanger is described for example in Chemie Technik, 28 Jahrgang (1999), Nr 4, p. 84.

The amount of air introduced in the purge silo was of about 1000 Nm³/hr: That was sufficient to eliminate the volatiles. The pellets arriving at 90°C did not require much further heating. The air was heated up to 105°C although heating it up to such temperature was not mandatory.

The cooling air was replaced by cooling water flowing through the plate cooler.
The pellets entered the plate exchanger at a temperature of about 90°C and left the heat exchanger at a temperature of about 60°C.

| | Energy requirement |
|---|---|
| | |
| purging air compression (1000 Nm³/hr) | 10 kw (electrical) |
| Heating of gas | 25 Kw (steam) |
| Cooling duty | 600 kw(cooling water) |

The amount of volatiles at the inlet of 600 ppm was reduced to 130 ppm after treatment. The removal efficiency was slightly decreased. The volatiles were treated using conventional recovery systems such as for example active carbon bed.

The level of angel hair found in the product was of about 1.5 g per 25 tons of product.

### Example 6.

The pellet cooling water temperature was set at 65 °C.

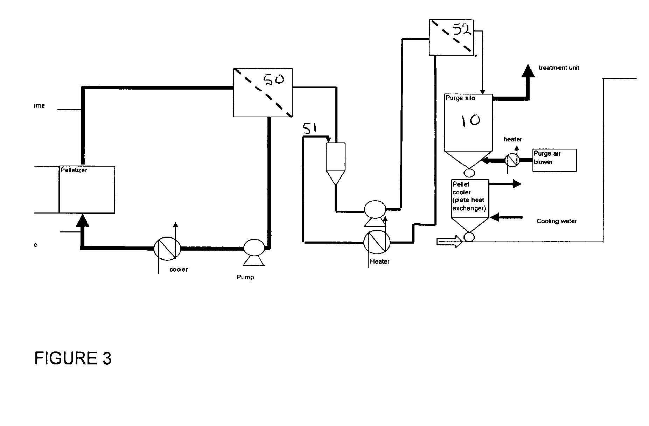

The pellet water flow was of about 420 m³/hr for a production of 42 tons/hour of pellets.
The pellets' residence time in the pellet cooling water was of 5 seconds. The pellets and water were separated in separator 50 and about 90% of the pellet cooling water was recovered. The concentrated pellet slurry (50% water, 50% pellets) was mixed with conveying water 51 at a temperature of 100°C. The pellets were conveyed to the dryer 52 installed above the purge silo 10 and then fed by gravity to the purge silo as represented in Figure 3. The pellets entering the purge silo were at a temperature of 100°C and thus very little heating was required. The cooling silo was replaced by the cooling plates system of example 5.

| | Energy requirement |
|---|---|
| | |
| purging gas compression (1000 Nm³/hr) | 10 kw(electrical) |
| Heating of gas | 25 Kw(steam) |
| Cooling duty | 850 kw (cooling water) |

The amount of volatiles at the inlet of 600 ppm was reduced to 65 ppm after treatment.

No angel hair were found.

### Example 7.

It uses the same system as example 6 except that the pellets remain in contact with the pellet cooling water for a period of time of 13 seconds and that the pellet transport water is at a temperature of 106 °C.

| | Energy requirement |
|---|---|
| | |
| purging gas compression (1000 Nm³/hr) | 10 kw(electrical) |
| Heating of gas | 25 Kw(steam) |
| Cooling duty | 850 kw (cooling water) |

The amount of volatiles at the inlet of 600 ppm was reduced to 65 ppm after treatment.

No angel hair were found.

The overall energy consumption for all examples is summarised in Table I.

**TABLE I.**

| | Ex1 | Ex2 | EX3 | Ex4 | Ex5 | Ex6 | Ex7 |
|---|---|---|---|---|---|---|---|
| pumps kW | 1330 | 1130 | 650 | 645 | 255 | 140 | 140 |
| heating kW | 1700 | 1160 | 300 | 300 | 25 | 25 | 775 |
| cooling kW | 8650 | 8750 | 8100 | 8100 | 8400 | 8450 | 9250 |

It can be seen that all embodiments according to the present invention offer a serious gain in energy.

## Claims

1. A method for reducing volatiles in polymer pellets that comprises the steps of:
a) retrieving the pellets from the extruder (1) and pushing them through a cooling pipe (3) with a stream of cooling water and with a residence time sufficient to reach the desired temperature;
b) separating the pellets from the water in a dryer (4), returning the water to the cooling system via a cooling device (5) and pushing the cooled pellets through a pipe (9) into the heating silo (10);
c) keeping the pellets for a period of time of from 5 to 50 hours in the heating silo under a stream of hot gas (11) entering near the lower end of the heating silo and escaping through the upper open surface;
d) continuously retrieving pellets through the bottom part of the heating silo via a valve(24) that allows control of the exiting flow of material in order to keep the heating silo constantly full;
e) feeding the pellets to the cooling silo (25);
f) keeping the cooling silo under a stream of gas at room temperature (26) to bring the pellets' temperature down to the desired level of from 60 to 70 °C;
g) sending the cooled pellets to the homogenisation silos.

2. The method of claim 1 wherein the desired temperature of step a) is of 60 to 70 °C, said temperature being achieved for a residence time of 10 to 20 seconds in a stream of cooling water kept at a temperature between 40 and 105 °C., preferably between 50 and 90°C, most preferably between 55 °C and 80°C

3. The method of claim 1 wherein the desired temperature of step a) is of about 100 °C, said temperature being achieved for a residence time of 3 to 10 seconds in a stream of cooling water kept at a temperature between 50 to 80 °C.

4. The method of claim 1 wherein the desired temperature of step a) is of about 100 °C, said temperature being achieved for a residence time of 10 to 20 seconds in a stream of cooling water kept at about 100 °C.

5. The method of any one of claims 1 or 3 or 4 wherein the cooled pellets are pushed through a pipe (9) into the heating silo by a stream of gas at a temperature between 20 and 60 °C.

6. The method of any one of claims 1 or 3 or 4 wherein the cooled pellets are pushed through a pipe (9) into the heating silo by a stream of water at a temperature of about 100 °C, and wherein the dryer is moved to the end of pipe (9) and before the heating silo.

7. The method of any one of the preceding claims wherein the heating silo is kept at a temperature of from 80 to 130 °C and the residence time of the pellets therein is of from 5 to 50 hours.

8. The method of any one of the preceding claims wherein the warmed-up cooling gas exiting the cooling silo is recycled back to the heating unit (11).

9. The method of any one of the preceding claims wherein the cooling silo is replaced by vertical cooling plates between which the pellets fall under gravitational acceleration.

10. Use of the method according to any one of the preceding claims to produce pellets having organoleptic properties.

11. Use of the method according to any one of the preceding claims to produce pellets having low volatiles content
